# EUROPEAN PATENT SPECIFICATION

(11) **EP 0 775 322 B1**
(45) Date of publication and mention of the grant of the patent: **30.01.2002**
(21) Application number: 95930796.8
(22) Date of filing: 07.08.1995
(51) Int. Cl.: G01T 1/24

(54) **SYSTEM AND METHOD FOR DETECTION OF IONIZING RADIATION**
SYSTEM UND METHODE ZUM NACHWEIS VON IONISIERENDER STRAHLUNG
SYSTEME ET METHODE DE DETECTION D'UN RAYONNEMENT IONISANT

(30) Priority: 11.08.1994 IL 11063794
(43) Date of publication of application: 28.05.1997
(73) Proprietor: URIGAL TECHNOLOGIES LTD., 76123 Rehovot (IL)
(72) Inventor: LACHISH, Uri, 76302 Rehovot (IL); TSIGELMAN, Alex, 49558 Petach Tikva (IL); EL-HANANY, Uri, 76287 Rehovot (IL)
(74) Representative: Hillier, Peter
(86) International application number: US9509965
(87) International publication number: WO9605521

(56) References cited:
- US-A- 3 999 071
- US-A- 4 692 782
- US-A- 4 996 432
- PATENT ABSTRACTS OF JAPAN, unexamined applications, E field, vol. 18, no. 406, issued 1994, July 28 THE PATENT OFFICE JAPANESE GOVERNMENT page 41 E 1585; & JP,A,06 120 549 (SHIMAZ DU CORP.).
- SOVIET PHYSICS - TECHNICAL PHYSICS, vol. 26, no. 9, issued September 1981 E.N. ARKAD'EVA et al. "Possible use of cadmium telluride for detection of pulsed x rays in medical tomography" pages 1122-1125,

## Description

### BACKGROUND OF THE INVENTION

Semiconductors as radiation detectors are discussed in G. F. Knoll, Radiation Detection and Measurement, John Wiley and Sons, Second Edition, 1989, pp. 349. Knoll defines an Ohmic contact as "a nonrectifying electrode through which charges of either sign can flow freely. If two Ohmic contacts are fitted on opposite faces of a slab of semiconductor and connected to a detection circuit, the equilibrium charge carrier concentrations in the semiconductor will be maintained. If an electron or hole is collected at one electrode, the same carrier species is injected at the opposite electrode to maintain the equilibrium concentrations in the semiconductor."

Regarding semiconductor diode detectors, Knoll states on page 350: "The steady-state leakage currents that are observed using Ohmic contacts are too high, even with the highest resistivity material available.... Instead, noninjecting or blocking electrodes are universally employed to reduce the magnitude of the current through the bulk of the semiconductor. If blocking electrodes are used, charge carriers initially removed by the application of an electric field are not replaced at the opposite electrode, and their overall concentration within the semiconductor will drop after application of an electric field."

Possible use of cadmium telluride for detection of pulsed x-rays in medical tomography is described in E. N. Arkad'eva et al, Sov. Phys. Tech. Phys. 26(9), September 1981, pp. 1122-1125. Arkad'eva et al state on pp. 1123-1124: "We used an M-P-M structure with osmium contacts as a detector based on these crystals... The current from the x-ray excitation (the photocurrent) at the detector may be written in the steady-state regime in the form j = e µ Δn E, where e is the electronic charge, µ is the carrier mobility, E is the electric field, Δn is the concentration of photocarriers created by the light, Δn=βkτl, where β is the quantum yield (β = 1), k is the absorption coefficient for x-rays in the transducer, τ is the carrier lifetime, and I is the radiation intensity."

Fig. 2 of Arkad'eva et al graphs x-ray absorption at various energies for cadmium telluride crystals of thickness 1 mm (curve 1) and 2 mm (curve 2).

Fig. 3 of Arkad'eva et al graphs dark current (curves 1 and 2) and photocurrent (curves 1' and 2') as a function of the voltage across the device in continuous wave operation.

Since the photocurrent is described by the equation j = eµ Δn E, where Δn is the concentration of photocarriers created by the light, it is apparent that each photocarrier contributes only one electron to the photocurrent, and no amplification effect of the charge carriers takes place.

U.S. Patent No. 3,999,071 to Siffert et al. describes another cadmium telluride detector which utilizes non-Ohmic electrodes to reduce leakage current.

In the unexamined patent application No. 6-120549 (A) to T. Sato, published in Patent Abstracts of Japan, E Field, Vol. 18, No. 406 issued July 28 1994, there is described a radiation detector of cadmium telluride with doped semiconductor regions between the CdTe crystal and the respective gold and indium negative and positive electrodes. The semiconductor regions effectively form a barrier layer, preventing the free flow of electrons into the crystal from the metallic contacts.

In the article "Preparation of Cadmium Telluride Single Crystals for Nuclear Detectors" by P. Höschl et al., published in Czech. J. Phys. B, 1975, pp. 585-596a is described various methods of preparation of samples of CdTe and their resulting properties for use in nuclear detectors.

In the article "Cadmium Telluride, Grown from Tellurium Solution, as a Material for Nuclear Radiation Detectors" by R.O. Bell et al., Phys. Stat. Sol. (A), 1970, pp. 375-387 are described CdTe detectors, having surface barrier electrodes, or aluminum electrodes evaporated to form Schottky barriers. Such electrodes cannot allow a free flow of electrons, and cannot allow an electron to enter the crystal from the negatively biased electrical contact each time an electron is collected by the positively biased electrical contact.

The use of a guard ring in silicon detectors is described by R.J.Fox et al., in an article entitled "Use of Guard Ring Silicon Surface Barrier Detectors in Beta Spectromotry" published in Rev. of Scientific Instruments, July 1962, p. 757.

A method of manufacture for a high-resistance n-type CdTe crystal is described in K. Zanio, et al, IEEE Trans. Nucl. Sci., NS21, 315, 1974.

A method for attaching contacts to the CdTe crystal is described in R. E. Braithwaite et al, Solid State Electron., 23, 1091, 1980.

A preferred method for producing p-type HgTe is described in E. Janik and R. Triboulet, "Ohmic contacts to p-type cadmium telluride and cadmium mercury telluride", J. Phys. D.: Appl. Phys., 16 (1983), 2333 - 2340.

A. Rose, in Concepts in photoconductivity and allied problems, Interscience Publishers, London, 1963, defines an Ohmic contact as follows (section 8.3): "An Ohmic contact is one that supplies a reservoir of carriers freely available to enter the semiconductor as needed."

### SUMMARY OF THE INVENTION

The present invention seeks to provide an improved radiation detector.

There is thus provided in accordance with the present invention a method for determining gamma ray photon energy including irradiating a high resistance n-type cadmium telluride alloy crystal with photons of ionizing radiation, providing first and second electric contacts which are in electrical communication with the crystal, which are respectively negatively and positively biased and which are in Ohmic contact with the crystal so as to provide free flow of electrons from the negatively biased contact to the crystal and wherein holes, generated by absorption of the photons in the crystal, recombine with the electrons, and determining the photon energy by measuring the amount of charge generated per photon absorbed by the crystal.

There is also provided in accordance with the present invention a gamma ray photocurrent measuring method including irradiating a high resistance n-type cadmium telluride alloy crystal with photons of ionizing radiation, providing first and second electrical contacts which are in electrical communication with the crystal, which are respectively negatively and positively biased, which are in Ohmic contact with the crystal so as to provide free flow of electrons from the negatively biased contact into the crystal, and which collect holes and electrons, respectively, from the crystal, wherein an electron enters the crystal from the negatively biased electrical contact each time an electron is collected by the positively biased electrical contact.

In accordance with a prefered embodiment of the invention,the bias of electrical contact is high enough to ensure that the number of electrons collected at the contacts is higher than the number of electrons generated by the photons, and measuring photocurrent induced by absorption of the photons in the crystal.

There is additionally provided in accordance with another preferred embodiment of the present invention a gamma ray photocurrent measuring method including irradiating a high resistance p-type cadmium telluride alloy crystal with gamma ray photons, providing first and second electrical contacts which are in electrical communication with the crystal, which are respectively positively and negatively biased and which collect electrons and holes, respectively, from the crystal, wherein a hole enters the crystal from the positively biased electrical contact each time a hole is collected by the negatively biased electrical contact, and wherein the bias of electrical contact is high enough to ensure that the number of holes collected at the contacts is higher than the number of holes generated by the photons, and measuring photocurrent induced by absorption of the photons in the crystal.

There is further provided in accordance with another preferred embodiment of the present invention a method for determining x-ray photon energy including irradiating a high resistance n-type cadmium telluride alloy crystal with x-ray photons, providing first and second electrical contacts which are in electrical communication with the crystal, which are respectively negatively and positively biased and which provide free flow of electrons from the negatively biased contact to the crystal and wherein holes, generated by absorption of the photons in the crystal, recombine with the electrons, and determining the photon energy by measuring the amount of charge generated per photon absorbed by the crystal.

There is also provided in accordance with another preferred embodiment of the present invention an x-ray photocurrent measuring method including irradiating a high resistance n-type cadmium telluride alloy crystal with x-ray photons, providing first and second electrical contacts which are in electrical communication with the crystal, which are respectively negatively and positively biased, and which collect holes and electrons, respectively, from the crystal, wherein an electron enters the crystal from the negatively biased electrical contact each time an electron is collected by the positively biased electrical contact, and wherein the bias of electrical contact is high enough to ensure that the number of electrons collected at the contacts is higher than the number of electrons generated by the photons, and measuring photocurrent induced by absorption of the photons in the crystal.

There is additionally provided in accordance with another preferred embodiment of the present invention an x-ray photocurrent measuring method including irradiating a high resistance p-type cadmium telluride alloy crystal with x-ray photons, providing first and second electrical contacts which are in electrical communication with the crystal, which are respectively positively and negatively biased and which collect electrons and holes, respectively, from the crystal, wherein a hole enters the crystal from the positively biased electrical contact each time a hole is collected by the negatively biased electrical contact, and wherein the bias of electrical contact is high enough to ensure that the number of holes collected at the contacts is higher than the number of holes generated by the photons, and measuring photocurrent induced by absorption of the photons in the crystal.

Further in accordance with a preferred embodiment of the present invention the positively biased contact is selected to provide free flow of electrons from the crystal to the positively biased contact.

Still further in accordance with a preferred embodiment of the present invention the positively biased contact is selected so as to provide recombination of electrons in the crystal with holes, injected into the crystal by the positively biased electrical contact.

Still further in accordance with a preferred embodiment of the present invention the negatively biased contact is selected to provide free flow of holes from the crystal to the negatively biased contact.

Additionally in accordance with a preferred embodiment of the present invention the negatively biased contact is selected so as to provide recombination of holes in the crystal with electrons, injected into the crystal by the negatively biased electrical contact.

Further in accordance with a preferred embodiment of the present invention negatively biased contact is formed of one of the following group of materials: indium; cadmium; aluminum; gallium; alloys including one or more of indium, cadmium, aluminum and gallium.

Still further in accordance with a preferred embodiment of the present invention the negatively biased contact is formed of an n-type layer of conductive semiconductor.

Additionally in accordance with a preferred embodiment of the present invention the n-type conductive semiconductor contact includes one of the following group: n-type conductive CdTe; n-type conductive HgₓCd₁₋ₓTe (0 =< x =<1); n-type conductive HgTe; alloys of n-type conductive CdTe in which zinc partially replaces Cd; and alloys of n-type conductive CdTe in which selenium partially replaces Te.

Further in accordance with a preferred embodiment of the present invention wherein the positively biased contact is formed of one of the following group of materials: gold; platinum; copper; osmium; nickel; tellurium; carbon; and alloys including one or more of gold, platinum, copper, osmium, nickel and tellurium.

Still further in accordance with a preferred embodiment of the present invention the positively biased contact is formed of a p-type layer of conductive semiconductor.

Additionally in accordance with a preferred embodiment of the present invention the p-type conductive semiconductor contact includes one of the following group: p-type conductive CdTe; p-type conductive HgₓCd₁₋ₓTe (0 =< x =< 1); p-type conductive HgTe; alloys of p-type conductive CdTe in which zinc partially replaces Cd; and alloys of p-type conductive CdTe in which selenium partially replaces Te.

Further in accordance with a preferred embodiment of the present invention the negatively biased contact is formed of one of the following group of materials: gold; platinum; copper; osmium; nickel; tellurium; carbon; and alloys including one or more of gold; platinum; copper; osmium; nickel and tellurium.

Still further in accordance with a preferred embodiment of the present invention the negatively biased contact is formed of a p-type conductive semiconductor.

Additionally in accordance with a preferred embodiment of the present invention the p-type conductive semiconductor contact includes one of the following group: p-type conductive CdTe; p-type conductive HgₓCd₁₋ₓTe (0 =< x =< 1); p-type conductive HgTe; alloys of p-type conductive CdTe in which zinc partially replaces Cd; and alloys of p-type conductive CdTe in which selenium partially replaces Te.

Further in accordance with a preferred embodiment of the present invention the positively biased contact is formed of one of the following group of materials: indium; cadmium; aluminum; gallium; alloys including one or more of indium, cadmium, aluminum and gallium.

Further in accordance with a preferred embodiment of the present invention the positively biased contact is formed of an n-type conductive semiconductor.

Still further in accordance with a preferred embodiment of the present invention the n-type conductive semiconductor contact includes one of the following group: n-type conductive CdTe; n-type conductive HgₓCd₁₋ₓTe (0 =< x =< 1); n-type conductive HgTe; alloys of n-type conductive CdTe in which zinc partially replaces Cd; and alloys of n-type conductive CdTe in which selenium partially replaces Te.

Yet further in accordance with a preferred embodiment of the present invention the n-type crystal is doped with one of the following elements: indium, gallium, aluminum, chlorine, bromine or iodine.

Additionally in accordance with a preferred embodiment of the present invention the p-type crystal is doped with one of the following elements: chlorine, bromine, iodine, copper, chromium or vanadium.

Additionally in accordance with a preferred embodiment of the present invention the cadmium telluride alloy crystal includes a cadmium telluride crystal.

Further in accordance with a preferred embodiment of the present invention the cadmium telluride alloy crystal includes a cadmium telluride alloy in which zinc partially replaces cadmium.

Still further in accordance with a preferred embodiment of the present invention the cadmium telluride alloy crystal includes a cadmium telluride alloy in which selenium partially replaces tellurium.

Additionally in accordance with a preferred embodiment of the present invention the system also includes a crystal equipped with a guard ring surrounding one of the contacts.

There is further provided in accordance with the present invention a system for determining photon energy of an ionizing radiation source including a high resistance n-type cadmium telluride alloy crystal irradiated by the source, first and second electrical contacts which are in electrical communication with the crystal, which are respectively negatively and positively biased and which are in Ohmic contact with the crystal so as to provide free flow of electrons from the negatively biased contact to the crystal and wherein holes, generated by absorption of the photons in the crystal, recombine with the electrons, and photon energy measuring apparatus operative to measure the amount of charge generated per photon absorbed by the crystal.

There is also provided in accordance with the present invention a system for measuring photocurrent induced by an ionizing radiation source including a high resistance n-type cadmium telluride alloy crystal irradiated by the gamma ray source, first and second electrical contacts which are in electrical communication with the crystal, which are respectively negatively and positively biased, which collect holes and electrons, respectively, from the crystal, which are in Ohmic contact with the crystal so as to provide free flow of electrons from the negatively biased contact into the crystal, such that an electron enters the crystal from the negatively biased electrical contact each time an electron is collected by the positively biased electrical contact, the bias of electrical contact is high enough to ensure that the number of electrons collected at the contacts is higher than the number of electrons generated by the photons and photocurrent measuring apparatus operative to measure photocurrent induced by absorption of the photons in the crystal.

In accordance with a preferred embodiment of the invention, there is additionally provided in accordance with a preferred embodiment of the present invention a system for measuring photocurrent induced by a gamma ray source including a high resistance p-type cadmium telluride alloy crystal irradiated by the gamma ray source, first and second electrical contacts which are in electrical communication with the crystal, which are respectively positively and negatively biased, which collect electrons and holes, respectively, from the crystal, and which cause a hole to enter the crystal from the positively biased electrical contact each time a hole is collected by the negatively biased electrical contact, and wherein the bias of electrical contact is high enough to ensure that the number of holes collected at the contacts is higher than the number of holes generated by the photons, and photocurrent measuring apparatus operative to measure photocurrent induced by absorption of the photons in the crystal.

There is further provided in accordance with another preferred embodiment of the present invention a system for determining the photon energy of an x-ray source including a high resistance n-type cadmium telluride alloy crystal irradiated by the x-ray source, first and second electrical contacts which are in electrical communication with the crystal, which are respectively negatively and positively biased and which provide free flow of electrons from the negatively biased contact to the crystal and wherein holes, generated by absorption of the photons in the crystal, recombine with the electrons, and photon energy measuring apparatus operative to measure the amount of charge generated per photon absorbed by the crystal.

There is also provided in accordance with a preferred embodiment of the present invention a system for measuring photocurrent induced by an x-ray source including a high resistance n-type cadmium telluride alloy crystal irradiated by the x-ray photons, first and second electrical contacts which are in electrical communication with the crystal, which are respectively negatively and positively biased, which collect holes and electrons, respectively, from the crystal, and which cause an electron to enter the crystal from the negatively biased electrical contact each time an electron is collected by the positively biased electrical contact, and wherein the bias of electrical contact is high enough to ensure that the number of electrons collected at the contacts is higher than the number of electrons generated by the photons, and photocurrent measuring apparatus operative to measure photocurrent induced by absorption of the photons in the crystal.

There is additionally provided in accordance with a preferred embodiment of the present invention a system for measuring photocurrent induced by an x-ray source including a high resistance p-type cadmium telluride alloy crystal irradiated by the x-ray source, first and second electrical contacts which are in electrical communication with the crystal, which are respectively positively and negatively biased, which collect electrons and holes, respectively, from the crystal, and which cause a hole to enter the crystal from the positively biased electrical contact each time a hole is collected by the negatively biased electrical contact, and wherein the bias of electrical contact is high enough to ensure that the number of holes collected at the contacts is higher than the number of holes generated by the photons, and photocurrent measuring apparatus operative to measure photocurrent induced by absorption of the photons in the crystal.

### BRIEF DESCRIPTION OF THE DRAWINGS

The present invention will be understood and appreciated from the following detailed description, taken in conjunction with the drawings in which:

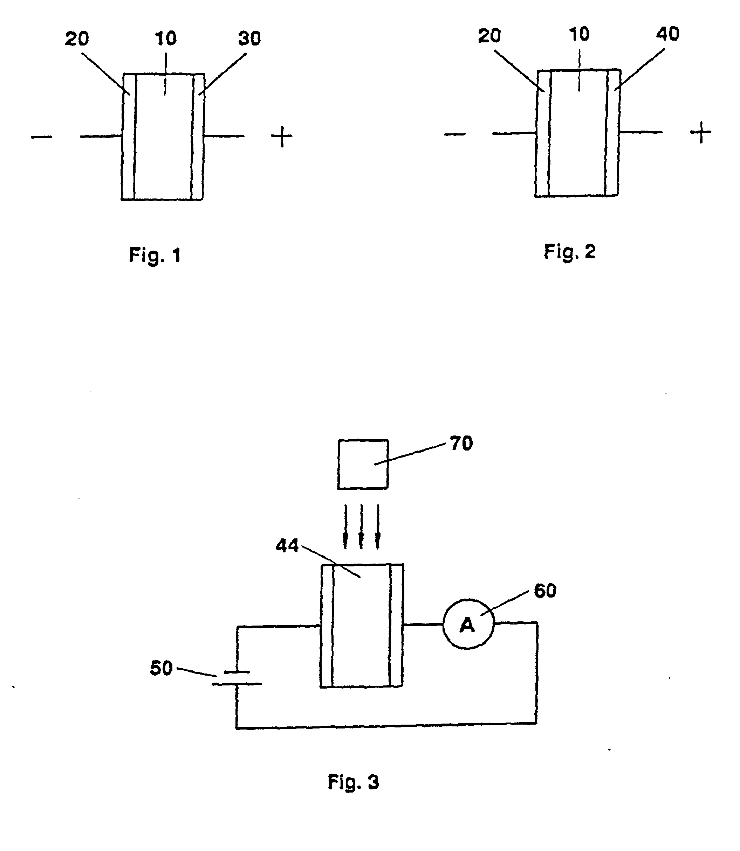

Fig. 1 is a simplified front view illustration of an x-ray or gamma ray detector constructed and operative in accordance with one preferred embodiment of the present invention;
Fig. 2 is a simplified front view illustration of an x-ray or gamma ray detector constructed and operative in accordance with another preferred embodiment of the present invention;
Fig. 3 is a simplified diagram of a preferred system for measuring a photocurrent induced by x-rays or gamma rays; and

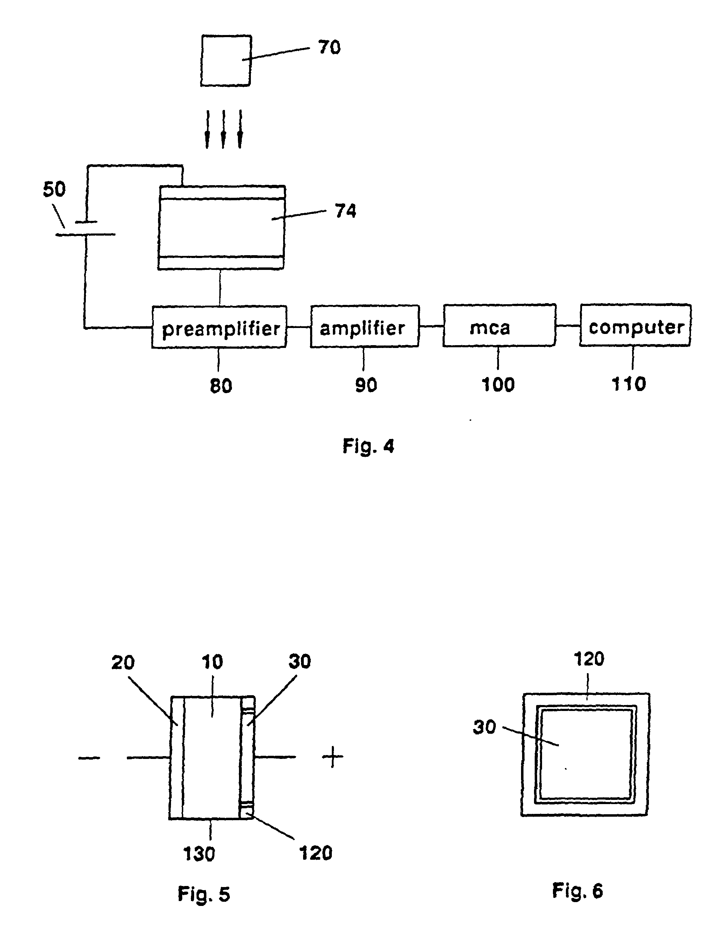

Fig. 4 is a simplified block diagram of preferred spectroscopy apparatus constructed and operative in accordance with a preferred embodiment of the present invention;
Fig. 5 is a front view illustration of a detector which is a variation of the detectors of Fig. 1 or Fig. 2 in that the positive contact is surrounded by a guard ring contact; and
Fig. 6 is a side view illustration of the detector of Fig. 5.

### DETAILED DESCRIPTION OF PREFERRED EMBODIMENTS

Reference is now made to Figs. 1 and 2 which are simplified illustrations of an x-ray or gamma ray detector constructed and operative in accordance with two respective alternative embodiments of the present invention.

The x-ray or gamma ray detectors of Figs. 1 and 2 may be constructed by the following method:
a. Provide a CdTe crystal 10, preferably a high-resistance indium-doped n-type CdTe crystal which may be manufactured in accordance with conventional methods such as that described in K. Zanio et al, IEEE Trans. Nucl. Sci., NS21, 315, 1974
b. Attach contacts to the CdTe crystal, using conventional methods such as the method described in R. E. Braithwaite et al, Solid State Electron., 23, 1091, 1980. According to one preferred embodiment of the present invention, as illustrated in Fig. 1, the contacts comprise a negatively biased contact 20 which provides free entrance of electrons into the crystal, and a positively biased contact 30 which provides free exit of electrons from the crystal. The contacts 20 and 30 may, for example, be formed by deposition of indium on the crystal 10.

According to an alternative embodiment of the present invention, the CdTe crystal 10 may comprise a high-resistance chlorine-doped p-type CdTe crystal which is manufactured in accordance with conventional methods such as that described in B. Biglari et al, Phys. Stat. Sol. (a)100, pp. 589-596, 1987. In this embodiment, the positively biased contact 30 provides free entrance of holes into the crystal and the negatively biased contact 20 provides free exit of holes from the crystal. The contacts 20 and 30 may, in this embodiment, be formed by deposition of a thin layer of conductive p-type CdTe on the crystal 10.

An alternative to the detector of Fig. 1 is illustrated in Fig. 2, in which the negatively biased contact 20 provides free entrance of electrons into a high resistance n-type CdTe crystal 10 and a positively biased contact 40 provides free entrance of holes into the crystal. The negatively biased contact 20 may, for example, be formed by deposition of indium on the crystal 10. The positively biased contact 40 may, for example, be formed of a thin layer of conductive p-type CdTe deposited on the crystal 10.

According to an alternative implementation of Fig. 2, the positively biased contact 40 provides free entrance of holes into the high resistance p type crystal and the negatively biased contact 20 provides free entrance of electrons into a p-type crystal. The positively biased contact 40 may, for example, be formed by deposition of a thin layer of conductive p-type CdTe on the crystal 10. The negatively biased contact 20 may, for example, be formed of indium deposited on the crystal.

Reference is now made to Fig. 3 which is a simplified diagram of a preferred system for measuring a photocurrent induced by x-rays or gamma rays. The system of Fig. 3 preferably includes a detector 44 which may be based on the detectors of Figs. 1 and 2, connected to a voltage bias source 50 such as a battery or power supply, an electrical current measurement device 60 such as an ammeter and a radiation source 70 which may comprise an x-ray tube which irradiates an object to be inspected, or alternatively a gamma source such as a gamma radioactive material.

Preferably, the mode of operation of the system of Fig. 3 is as follows:
a. The CdTe crystal is irradiated by a flux of x-ray photons or gamma ray photons.
b. As each photon is absorbed by the CdTe crystal, it generates equal numbers of electrons and holes. These electrons and holes flow in opposite directions, under the influence of the bias voltage applied to the detector contacts 20 and 30. The electrons flow toward the positive contact whereas the holes flow toward the negative contact.
   In the detector of Fig. 1, if the crystal is an n-type crystal, an electron reaching the positive contact leaves the crystal by entering the contact. In the detector of Fig. 2, an electron reaching the positive contact disappears by recombination with a hole injected into the crystal by the positive contact.
   If the crystal is a p-type crystal, then, in the detector of Fig. 1, a hole reaching the negative contact leaves the crystal by entering the contact. In the detector of Fig. 2, a hole reaching the negative contact disappears by recombination with an electron injected into the crystal by the negative contact.
c. This flow of electrons and holes results in an electric current measured by the ammeter 60. According to the general theory of photoconductivity, this current continues, as more electrons or holes are free to enter the crystal through the negative or positive contact, respectively, and leave it through the positive or negative contact, respectively, until electrons and holes disappear in pairs within the crystal by electron hole recombination.

The electron or hole transition time through the crystal is inversely proportional to the bias voltage. Therefore, application of a sufficiently high bias voltage causes the transition time to become shorter than the electron or hole recombination time. The photocurrent includes both electrons and holes originally generated by the photons, and electrons or holes entering the crystal through the contacts. Whenever the transition time is shorter than the recombination time, the photocurrent is significantly amplified (current gain) compared to the current due only to the electrons and holes originally generated by the photons.

For example, for a detector having a 1.5 mm distance between the contacts, and a bias voltage of 200 V, amplification by a factor of 250 may be obtained, relative to the signal obtained with a conventional detector which is similar in every respect except that the contacts are blocking.

As described above, the contacts allow free charge flow into and out of the crystal so that the dark current in the detector shown and described herein is high compared to conventional CdTe detectors equipped with blocking contacts. However, since the current gain is also high in the detector shown and described herein, relative to a conventional detector, the signal-to-dark current ratio is comparable to or better than that of a conventional detector.

A further advantage of the system of Fig. 3 is that the current is not affected by hole trapping within the crystal, in contrast to conventional detectors.

Reference is now made to Fig. 4 which is a simplified block diagram of preferred spectroscopy system constructed and operative in accordance with a preferred embodiment of the present invention in which the charge generated by individual x-ray photons or gamma ray photons is measured.

The system of Fig. 4 preferably includes the following components:
a. A source 70 of x-ray or gamma rays. For example, the source may comprise an x-ray source such as an x-ray tube which irradiates an object to be inspected. Alternatively, the source may comprise an object to be inspected which incorporates within it a radioactive source, such as a patient to whom a drug containing a radioactive source has been administered.
b. An x-ray or gamma ray detector 74 which may be based on the detectors of Figs. 1 or 2;
c. A voltage bias source 50 such as a battery or a power supply;
d. A preamplifier 80 such as an EG&G ORTEC model number 142A;
e. A spectroscopy amplifier 90, such as an EG&G ORTEC model number 572;
f. A multi-channel analyzer (MCA) 100 such as an EG&G ORTEC model number 916; and
g. A computer 110 such as an IBM AT 286.

Units 80, 90, 100 and 110 are commercially available as a single module, namely the Gamma Spectroscopy System, marketed by EG&G ORTEC.

Preferably, the mode of operation of the system of Fig. 4 is as follows:
a. The CdTe detector is irradiated by a flux of x-ray photons or gamma ray photons.
b. As a single photon is absorbed by the CdTe crystal, it generates equal numbers of electrons and holes. These electrons and holes flow in opposite directions, under the influence of the bias voltage applied to the detector contacts 20 and 30. The electrons flow toward the positive contact whereas the holes flow toward the negative contact.

If the crystal is an n-type crystal, then, in the detector of Fig. 1, an electron reaching the positive contact leaves the crystal by entering the contact. In the detector of Fig. 2, an electron reaching the positive contact disappears by recombination with a hole injected into the crystal by the positive contact.

Simultaneously with the above-described electron and hole flow, other electrons enter the crystal from the negative contact and flow toward the holes.

The flow terminates when all the electrons and holes disappear from the crystal either by exiting through the contacts, or by electron hole recombination within the crystal.

The spectroscopy system of Fig. 4 measures the charge collected from each single photon absorbed by the detector, and provides the statistical distribution of charges of all the photons absorbed by the detector.

In the present invention, holes recombine with electrons arriving from the negative contact. In contrast, in conventional CdTe detectors, holes must flow all the way toward the negative contact. Since electron flow is faster than hole flow, the time required for complete charge collection in the detector of Figs. 1 or 2 is shorter than in conventional CdTe detectors.

Due to the shorter charge collection time provided by the method of the present invention, spectroscopic measurements may be carried out by the system of Fig. 4 with a higher signal-to-noise ratio and/or at higher photon flux rates, compared to conventional CdTe detectors.

A further advantage of the system of Fig. 4 is that the detector is not adversely affected by hole trapping within the crystal.

Suitable materials for use in the spectroscopy system of Fig. 4 include the following high resistance n-type crystals:
a. cadmium telluride;
b. Alloys thereof in which an additional material such as zinc replaces a certain percentage of the cadmium (Cd₁₋ₓZnₓTe where 0 <=x <= 1).
c. Alloys thereof in which an additional material such as selenium replaces a certain percentage of the tellurium (CdTe₁₋ₓSeₓ where 0 <=x <= 1).
d. Combinations of a, b and c.

The n-type crystal may be doped with materials such as: indium, gallium, aluminum, chlorine, bromine or iodine.

Contacts providing free flow of electrons to and from the crystals, for use in the spectroscopy system of Fig. 4 may be formed of indium, cadmium, aluminum, gallium, and alloys including these materials. Also, any n-type conductive semiconductor may be employed such as n-type conductive CdTe, n-type conductive CdS, n-type conductive ZnSe, and n-type conductive HgₓCd₁₋ₓTe (0 =< x =< 1).

Contacts providing free flow of holes to the crystals, for use in the spectroscopy system of Fig. 4 may, for example, be formed of gold, platinum, copper, osmium, nickel, tellurium, antimony, carbon, and alloys including these materials, as well as p-type conductive semiconductors such as p-type conductive CdTe or p-type conductive HgₓCd₁₋ₓTe (0 =< x =< 1). or p-type conductive HgTe.

A preferred method for producing p-type HgTe is described in E. Janik and R. Triboulet, "Ohmic contacts to p-type cadmium telluride and cadmium mercury telluride", J. Phys. D.: Appl. Phys., 16 (1983), 2333 - 2340.

Suitable crystals for use in the photocurrent measurement system of Fig. 3 include the crystals described above as suitable for the embodiment of Fig. 4 and, additionally, similar crystals which are high-resistant p-type instead of n-type.

The p-type crystal may be doped with materials such as: chlorine, bromine, iodine, copper, chromium or vanadium.

Contacts providing free flow of electrons to p-type crystals, for use in the photocurrent measurement system of Fig. 3 may be the same as the contacts, described above with reference to Fig. 4, which provide free flow of electrons to and from n-type crystals.

Contacts providing free flow of holes to and from p-type crystals, for use in the photocurrent measurement system of Fig. 3 may, for example, be the same as the contacts, described above with reference to Fig. 4, which provide free flow of holes into n-type crystals.

The operation of detectors made of p-type crystals is generally the same as the operation of detectors having n-type crystals, as described above with reference to Fig. 3, except that the major electric current carriers are holes rather than electrons.

According to a preferred embodiment of the present invention, as illustrated in Figs. 5 and 6, a guard ring 120 is provided which surrounds at least one of the contacts, such as the positive contact 30 (Fig. 1) or 40 (Fig. 2). The guard ring reduces deterioration of the detector's performance due to the influence of the detector's side walls 130. The guard ring may be identical in configuration and as to material to the positive contact 30. The embodiment of Figs. 5 and 6 is suitable for the spectroscopy application of Fig. 4.

One preferred method for fabricating the positive contact and the guard ring is as follows:
a. Fabricate the positive contact;
b. Using photolithographic techniques, separating a guard ring out of the positive contact.

In the present specification and claims, the term "cadmium telluride" or "CdTe" is used to refer either to undopedCdTe or, preferably, to doped CdTe.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

## Claims

1. A method for determining the energy of a photon of ionizing radiation comprising:
irradiating a high resistance n-type cadmium telluride alloy crystal (10) with photons of ionizing radiation;
providing on said crystal first (20) and second (30) electrical contacts which are respectively negatively and positively biased; and
determining the photon energy by measuring the amount of charge generated per photon absorbed by the crystal;
said method being **characterized in that** said electrical contacts (20, 30) are in Ohmic contact with the crystal (10) so as to provide free flow of electrons from the negatively biased contact (20) into the crystal, and wherein holes generated by absorption of photons in said crystal undergo recombination with said electrons.

2. A method for measuring a photocurrent induced by an ionizing radiation comprising:
irradiating a high resistance n-type cadmium telluride alloy crystal (10) with a photon flux of ionizing radiation;
providing on said crystal first (20) and second (30) electrical contacts, which are respectively negatively and positively biased, and which respectively collect holes and electrons from the crystal; and
measuring the photocurrent induced by absorption of the photons in the crystal;
said method being **characterized in that** said electrical contacts (20, 30) are in Ohmic contact with the crystal (10) so as to provide free flow of electrons from the negatively biased contact (20) into the crystal, such that an electron enters the crystal from the negatively biased electrical contact (20) each time an electron is collected by the positively biased electrical contact (30).

3. A method for measuring a photocurrent induced by an ionizing radiation according to claim 2, and also comprising the step of making said bias sufficiently high to ensure that the number of electrons of said photocurrent collected at said positively biased contact is significantly higher than the number of electrons generated by said photons.

4. A method according to claim 1 and wherein said recombination of holes with electrons is operative such that said step of determining the photon energy by measuring the amount of charge generated per photon absorbed by the crystal is not adversely affected by hole trapping within the crystal.

5. A method according to any of claims 1 to 3, wherein the negatively biased contact is formed of one of the following group of materials:
indium; cadmium; aluminum; gallium; alloys including one or more of indium, cadmium, aluminum and gallium; and an n-type layer of conductive semiconductor.

6. A method according to claim 5 wherein the n-type layer of conductive semiconductor comprises one of the following group of materials:
n-type conductive CdTe; n-type conductive HgₓCd₁₋ₓTe (0 ≤ x ≤1); n-type conductive HgTe; alloys of n-type conductive CdTe in which zinc partially replaces Cd; and alloys of n-type conductive CdTe in which selenium partially replaces Te.

7. A method according to any of claims 1 to 3, wherein the positively biased contact is formed of one of the following group of materials:
gold; platinum; copper; osmium; nickel; tellurium; carbon; antimony; alloys including one or more of gold, platinum, copper, osmium, nickel, antimony, carbon and tellurium; and a p-type layer of conductive semiconductor.

8. A method according to claim 7 wherein the p-type layer of conductive semiconductor comprises one of the following group of materials:
p-type conductive CdTe; p-type conductive HgₓCd₁₋ₓTe (0 ≤ x ≤1); p-type conductive HgTe; alloys of p-type conductive CdTe in which zinc partially replaces Cd; and alloys of p-type conductive CdTe in which selenium partially replaces Te.

9. A method according to any of claims 1 to 3, wherein said n-type crystal is doped with one of the following elements: indium, gallium, aluminum, chlorine, bromine or iodine.

10. A method according to any of claims 1 to 3, wherein the cadmium telluride alloy crystal comprises one of the group of following materials:
a cadmium telluride crystal; a cadmium telluride alloy in which zinc partially replaces cadmium; and a cadmium telluride alloy in which selenium partially replaces tellurium.

11. A method according to any of the previous claims and also comprising the step of surrounding at least one of the contacts with a guard ring.

12. A method according to any of the previous claims and wherein said ionizing radiation is gamma ray radiation.

13. A method according to any of the previous claims and wherein said ionizing radiation is X-ray radiation.

14. A system for determining photon energy of an ionizing radiation source comprising:
a high resistance n-type cadmium telluride alloy crystal (10) irradiated by the source;
first (20) and second (30) electrical contacts which are respectively negatively and positively biased; and
photon energy measuring apparatus operative to measure the amount of charge generated per photon absorbed by the crystal;
said system being **characterized in that** said electrical contacts (20, 30) are in Ohmic contact with the crystal (10), so as to provide free flow of electrons from the negatively biased contact to the crystal and wherein holes, generated by absorption of the photons in the crystal, recombine with said electrons.

15. A system for measuring photocurrent induced by an ionizing radiation source comprising:
a high resistance n-type cadmium telluride alloy crystal (10) irradiated by the source;
first (20) and second (30) electrical contacts which are respectively negatively and positively biased, and which respectively collect holes and electrons from the crystal; and
photocurrent measuring apparatus operative to measure photocurrent induced by absorption of the photons in the crystal;
said system being **characterized in that** said electrical contacts (20, 30) are in Ohmic contact with the crystal (10) so as to provide free flow of electrons from the negatively biased contact into the crystal, such that an electron enters the crystal from said negatively biased electrical contact each time an electron is collected by said positively biased electrical contact.

16. A system for measuring photocurrent according to claim 15, and wherein the bias between the electrical contacts is high enough to ensure that the number of electrons of said photocurrent collected at said positively biased contact is significantly higher than the number of electrons generated by the photons.

17. A system according to any of claims 14 to 16 and wherein said ionizing radiation source is a gamma ray source.

18. A system according to any of claims 14 to 16 and wherein said ionizing radiation source is an X-ray source.

19. A system according to any of claim 14 to 16 and wherein at least one of the contacts is surrounded by a guard ring.

## Patentansprüche

1. Verfahren zur Bestimmung der Energie eines Photons einer ionisierenden Strahlung, mit den folgenden Schritten:
Bestrahlen eines hochohmigen n-leitenden Cadmiumtellurid-Legierungskristalls (10) mit Photonen einer ionisierenden Strahlung;
Anbringen erster (20) bzw. zweiter (30) elektrischer Kontakte an dem Kristall, die negativ bzw. positiv vorgespannt sind; und
Bestimmen der Photonenenergie durch Messen der pro Photon erzeugten Ladungsmenge, die durch den Kristall absorbiert wird;
wobei das Verfahren **dadurch gekennzeichnet ist, daß** sich die elektrischen Kontakte (20, 30) im ohmschen Kontakt mit dem Kristall (10) befinden, um für einen freien Elektronenfluß vom negativ vorgespannten Kontakt (20) in den Kristall zu sorgen, wobei Löcher, die durch Absorption von Photonen in dem Kristall entstehen, mit den Elektronen rekombinieren.

2. Verfahren zur Messung eines durch ionisierende Strahlung induzierten Photostroms, mit den folgenden Schritten:
Bestrahlen eines hochohmigen n-leitenden Cadmiumtellurid-Legierungskristalls (10) mit einem Photonenfluß einer ionisierenden Strahlung;
Anbringen erster (20) bzw. zweiter (30) elektrischer Kontakte an dem Kristall, die negativ bzw. positiv vorgespannt sind und die Löcher bzw. Elektronen aus dem Kristall auffangen; und
Messen des Photostroms, der durch Absorption der Photonen in dem Kristall induziert wird;
wobei das Verfahren **dadurch gekennzeichnet ist, daß** sich die elektrischen Kontakte (20, 30) im ohmschen Kontakt mit dem Kristall (10) befinden, um für einen freien Elektronenfluß vom negativ vorgespannten Kontakt (20) in den Kristall zu sorgen, so daß jedesmal, wenn ein Elektron durch den positiv vorgespannten elektrischen Kontakt (30) aufgefangen wird, ein Elektron von dem negativ vorgespannten elektrischen Kontakt (20) in den Kristall eintritt.

3. Verfahren zur Messung eines durch ionisierende Strahlung induzierten Photostroms nach Anspruch 2, das ferner den Schritt zum Anlegen einer ausreichend hohen Vorspannung aufweist, um sicherzustellen, daß die Anzahl der an dem positiv vorgespannten Kontakt aufgefangenen Elektronen des Photostroms wesentlich höher ist als die Anzahl der durch die Photonen erzeugten Elektronen.

4. Verfahren nach Anspruch 1, wobei - die Rekombination von Löchern mit Elektronen so erfolgt, daß der Schritt zur Bestimmung der Photonenenergie durch Messen der pro Photon erzeugten Ladungsmenge, die durch den Kristall absorbiert wird, nicht durch Löchereinfang innerhalb des Kristalls beeinträchtigt wird.

5. Verfahren nach einem der Ansprüche 1 bis 3, wobei der negativ vorgespannte Kontakt aus einem Material, das aus der folgenden Gruppe ausgewählt ist:
Indium; Cadmium; Aluminium; Gallium; Legierungen aus einem oder mehreren der Materialien Indium, Cadmium, Aluminium und Gallium; und einer n-leitenden Halbleiterschicht geformt wird.

6. Verfahren nach Anspruch 5, wobei die n-leitende Halbleiterschicht ein Material aufweist, das aus der folgenden Materialgruppe ausgewählt ist:
n-leitendes CdTe; n-leitendes HGₓCd₁₋ₓTe (0 ≤ x ≤ 1); n-leitendes HgTe; Legierungen aus n-leitendem CdTe, in denen Cd teilweise durch Zink ersetzt ist; und Legierungen aus n-leitendem CdTe, in denen Te teilweise durch Selen ersetzt ist.

7. Verfahren nach einem der Ansprüche 1 bis 3, wobei der positiv vorgespannte Kontakt aus einem Material, das aus der folgenden Materialgruppe ausgewählt ist:
Gold; Platin; Kupfer; Osmium; Nickel; Tellur; Kohlenstoff; Antimon; Legierungen, die eines oder mehrere von den Materialien Gold, Platin, Kupfer, Osmium, Nickel, Antimon, Kohlenstoff und Tellur enthalten; und einer p-leitenden Halbleiterschicht geformt wird.

8. Verfahren nach Anspruch 7, wobei die p-leitende Halbleiterschicht ein Material aufweist, das aus der folgenden Materialgruppe ausgewählt ist:
p-leitendes CdTe; p-leitendes HGₓCd₁₋ₓTe (0 ≤ x ≤ 1); p-leitendes HgTe; Legierungen aus p-leitendem CdTe, in denen Cd teilweise durch Zink ersetzt ist; und Legierungen aus p-leitendem CdTe, in denen Te teilweise durch Selen ersetzt ist.

9. Verfahren nach einem der Ansprüche 1 bis 3, wobei der n-leitende Kristall mit einem der folgenden Elemente dotiert ist: Indium, Gallium, Aluminium, Chlor, Brom oder Iod.

10. Verfahren nach einem der Ansprüche 1 bis 3, wobei der Cadmiumtellurid-Legierungskristall ein Material aus der folgenden Materialgruppe aufweist:
einen Cadmiumtelluridkristall; eine Cadmiumtellurid-Legierung, in der Cadmium teilweise durch Zink ersetzt ist; und eine Cadmiumtellurid-Legierung, in der Tellur teilweise durch Selen ersetzt ist.

11. Verfahren nach einem der vorstehenden Ansprüche, das ferner den Schritt zum Umgeben mindestens eines der Kontakte mit einem Isolationsschutzring aufweist.

12. Verfahren nach einem der vorstehenden Ansprüche, wobei die ionisierende Strahlung Gammastrahlung ist.

13. Verfahren nach einem der vorstehenden Ansprüche, wobei die ionisierende Strahlung Röntgenstrahlung ist.

14. System zur Bestimmung der Photonenenergie einer Quelle für ionisierende Strahlung, wobei das System aufweist:
einen hochohmigen n-leitenden Cadmiumtelluridkristall (10), der durch die Quelle bestrahlt wird;
erste (20) bzw. zweite (30) elektrische Kontakte, die negativ bzw. positiv vorgespannt sind; und
eine Vorrichtung zur Messung der Photonenenergie, welche die pro Photon erzeugte Ladungsmenge mißt, die vom Kristall absorbiert wird;
wobei das System **dadurch gekennzeichnet ist, daß** sich die elektrischen Kontakte (20, 30) im ohmschen Kontakt mit dem Kristall (10) befinden, um für einen freien Elektronenfluß vom negativ vorgespannten Kontakt zum Kristall zu sorgen, und wobei Löcher, die durch Absorption der Photonen in dem Kristall entstehen, mit den Elektronen rekombinieren.

15. System zur Messung des durch eine Quelle ionisierender Strahlung induzierten Photostroms, wobei das System aufweist:
einen durch die Quelle bestrahlten hochohmigen n-leitenden Cadmiumtellurid-Legierungskristall (10);
erste (20) bzw. zweite (30) elektrische Kontakte, die negativ bzw. positiv vorgespannt sind und die Löcher bzw. Elektronen aus dem Kristall auffangen; und
eine Vorrichtung zur Messung des Photostroms, die den durch Absorption der Photonen im Kristall induzierten Photostrom mißt;
wobei das System **dadurch gekennzeichnet ist, daß** sich die elektrischen Kontakte (20, 30) im ohmschen Kontakt mit dem Kristall (10) befinden, um für einen freien Elektronenfluß vom negativ vorgespannten Kontakt in den Kristall zu sorgen, so daß jedesmal, wenn ein Elektron durch den positiv vorgespannten elektrischen Kontakt aufgefangen wird, ein Elektron vom negativ vorgespannten elektrischen Kontakt in den Kristall eintritt.

16. System zur Messung des Photostroms nach Anspruch 15, wobei die Vorspannung zwischen den elektrischen Kontakten hoch genug ist, um sicherzustellen, daß die Anzahl der an dem positiv vorgespannten Kontakt aufgefangenen Elektronen des Photostroms wesentlich höher ist als die Anzahl der durch die Photonen erzeugten Elektronen.

17. System nach einem der Ansprüche 14 bis 16, wobei die Quelle ionisierender Strahlung eine Gammastrahlungsquelle ist.

18. System nach einem der Ansprüche 14 bis 16, wobei die Quelle ionisierender Strahlung eine Röntgenstrahlungsquelle ist.

19. System nach einem der Ansprüche 14 bis 16, wobei mindestens einer der Kontakte durch einen Isolationsschutzring umgeben ist.

## Revendications

1. Procédé pour déterminer l'énergie d'un photon de rayonnement ionisant comprenant:
l'irradiation d'un cristal d'alliage de tellure de cadmium de type n haute résistance (10) avec des photons de rayonnement ionisant;
la constitution sur ledit cristal de premier (20) et second (30) contacts électriques qui sont respectivement polarisés négativement et positivement; et
la détermination de l'énergie photonique en mesurant la quantité de charge générée par photon absorbé par le cristal,
ledit procédé étant **caractérisé en ce que** lesdits contacts électriques (20, 30) sont en contact ohmique avec le cristal (10) de manière à assurer une circulation libre d'électrons depuis le contact polarisé négativement (20) dans le cristal, et dans lequel des trous générés par absorption de photons dans ledit cristal subissent une recombinaison avec lesdits électrons.

2. Procédé pour mesurer un photocourant induit par un rayonnement ionisant comprenant:
l'irradiation d'un cristal d'alliage de tellure de cadmium de type n haute résistance (10) avec un flux photonique de rayonnement ionisant;
la constitution sur ledit cristal de premier (20) et second (30) contacts électriques qui sont respectivement polarisés négativement et positivement et qui collectent respectivement des trous et des électrons à partir du cristal; et
la mesure du photocourant induit par absorption des photons dans le cristal,
ledit procédé étant **caractérisé en ce que** lesdits contacts électriques (20, 30) sont en contact ohmique avec le cristal (10) de manière à assurer une circulation libre d'électrons depuis le contact polarisé négativement (20) dans le cristal, de telle sorte qu'un électron entre dans le cristal depuis le contact électrique polarisé négativement (20) chaque fois qu'un électron est collecté par le contact électrique polarisé positivement (30).

3. Procédé pour mesurer un photocourant induit par un rayonnement ionisant selon la revendication 2, et comprenant également l'étape consistant à faire en sorte que ladite polarisation soit suffisamment élevée afin d'assurer que le nombre d'électrons dudit photocourant collectés au niveau dudit contact polarisé positivement soit significativement supérieur au nombre d'électrons générés par lesdits photons.

4. Procédé selon la revendication 1, et dans lequel ladite recombinaison de trous avec des électrons est opérante de telle sorte que ladite étape de détermination de l'énergie photonique en mesurant la quantité de charge générée par photon absorbé par le cristal n'est pas affectée défavorablement par un piégeage de trous à l'intérieur du cristal.

5. Procédé selon l'une quelconque des revendications 1 à 3, dans lequel le contact polarisé négativement est formé en un matériau du groupe de matériaux qui suit:
indium; cadmium; aluminium; gallium; des alliages incluant un ou plusieurs éléments que sont indium, cadmium, aluminium et gallium; et une couche de type n en un semiconducteur conducteur.

6. Procédé selon la revendication 5, dans lequel la couche de type n en un semiconducteur conducteur comprend un matériau du groupe de matériaux qui suit:
CdTe conducteur de type n; HgₓCd₁₋ₓTe (0 ≤ x ≤ 1) conducteur de type n; HgTe conducteur de type n; alliages de CdTe conducteur de type n dans lequel du zinc remplace partiellement du Cd; et alliages de CdTe conducteur de type n dans lequel du sélénium remplace partiellement du Te.

7. Procédé selon l'une quelconque des revendications 1 à 3, dans lequel le contact polarisé positivement est formé en un matériau du groupe de matériaux qui suit:
or; platine; cuivre; osmium; nickel; tellure; carbone; antimoine; des alliages incluant un ou plusieurs éléments que sont or, platine, cuivre, osmium, nickel, antimoine, carbone et tellure; et une couche de type p en un semiconducteur conducteur.

8. Procédé selon la revendication 7, dans lequel la couche de type p en un semiconducteur conducteur comprend un matériau du groupe de matériaux qui suit:
CdTe conducteur de type p; HgₓCd₁₋ₓTe (0 ≤ x ≤ 1) conducteur de type p; HgTe conducteur de type p; alliages de CdTe conducteur de type p dans lequel du zinc remplace partiellement du Cd; et alliages de CdTe conducteur de type p dans lequel du sélénium remplace partiellement du Te.

9. Procédé selon l'une quelconque des revendications 1 à 3, dans lequel ledit cristal de type n est dopé avec l'un des éléments qui suivent: indium, gallium, aluminium, chlore, brome et iode.

10. Procédé selon l'une quelconque des revendications 1 à 3, dans lequel le cristal d'alliage de tellure de cadmium comprend un matériau du groupe de matériaux qui suit:
un cristal de tellure de cadmium; un alliage de tellure de cadmium dans lequel du zinc remplace partiellement du cadmium; et un alliage de tellure de cadmium dans lequel du sélénium remplace partiellement du tellure.

11. Procédé selon l'une quelconque des revendications précédentes, et comprenant également l'étape consistant à entourer au moins l'un des contacts avec un anneau de garde.

12. Procédé selon l'une quelconque des revendications précédentes, et dans lequel ledit rayonnement ionisant est un rayonnement de rayons gamma.

13. Procédé selon l'une quelconque des revendications précédentes, et dans lequel ledit rayonnement ionisant est un rayonnement de rayons X.

14. Système pour déterminer une énergie photonique d'une source de rayonnement ionisant comprenant:
un cristal d'alliage de tellure de cadmium de type n haute résistance (10) irradié par la source;
des premier (20) et second (30) contacts électriques qui sont respectivement polarisés négativement et positivement; et
un appareil de mesure d'énergie photonique qui fonctionne pour mesurer la quantité de charge générée par photon absorbé par le cristal,
ledit système étant **caractérisé en ce que** lesdits contacts électriques (20, 30) sont en contact ohmique avec le cristal (10), de manière à assurer une circulation libre d'électrons depuis le contact polarisé négativement jusqu'au cristal, et dans lequel des trous, générés par absorption des photons dans le cristal, se recombinent avec lesdits électrons.

15. Système pour mesurer un photocourant induit par une source de rayonnement ionisant comprenant:
un cristal d'alliage de tellure de cadmium de type n haute résistance (10) irradié par la source;
des premier (20) et second (30) contacts électriques qui sont respectivement polarisés négativement et positivement, et qui collectent respectivement des trous et des électrons à partir du cristal; et
un appareil de mesure de photocourant qui fonctionne pour mesurer un photocourant induit par absorption des photons dans le cristal,
ledit système étant **caractérisé en ce que** lesdits contacts électriques (20, 30) sont en contact ohmique avec le cristal (10) de manière à assurer une circulation libre d'électrons depuis le contact polarisé négativement dans le cristal, de telle sorte qu'un électron entre dans le cristal depuis ledit contact électrique polarisé négativement chaque fois qu'un électron est collecté par ledit contact électrique polarisé positivement.

16. Système pour mesurer un photocourant selon la revendication 15, et dans lequel la polarisation entre les contacts électriques est suffisamment élevée pour assurer que le nombre d'électrons dudit photocourant collectés au niveau dudit contact polarisé positivement est significativement supérieur au nombre d'électrons générés par les photons.

17. Système selon l'une quelconque des revendications 14 à 16, et dans lequel ladite source de rayonnement ionisant est une source de rayons gamma.

18. Système selon l'une quelconque des revendications 14 à 16, et dans lequel ladite source de rayonnement ionisant est une source de rayons X.

19. Système selon l'une quelconque des revendications 14 à 16, et dans lequel au moins l'un des contacts est entouré par un anneau de garde.
